# EUROPÄISCHE PATENTSCHRIFT

(11) **EP 1 677 285 B1**
(45) Veröffentlichungstag und Bekanntmachung des Hinweises auf die Patenterteilung: **06.08.2008**
(21) Anmeldenummer: 05111603.6
(22) Anmeldetag: 02.12.2005
(51) Int. Cl.: G10L 15/06

(54) **Verfahren zur Ermittlung von Aussprachevarianten eines Wortes aus einem vorgebbaren Vokabular eines Spracherkennungssystems**
Method for determining pronunciation variants of a word from a predeterminable vocabulary of a speech recognition system
Procédé destiné à la détermination de variantes de prononciation d'un mot provenant d'un vocabulaire préréglé d'un système de reconnaissance vocale

(30) Priorität: 30.12.2004 DE 102004063552
(43) Veröffentlichungstag der Anmeldung: 05.07.2006
(73) Patentinhaber: SIEMENS AKTIENGESELLSCHAFT, 80333 München (DE)
(72) Erfinder: Kunstmann, Niels, 85540 Haar (DE)

(56) Entgegenhaltungen:
- EP-A- 0 321 410
- EP-A- 1 126 438
- DE VOS L ET AL: "Algorithm and DSP-implementation for a speaker-independent single-word speech recognizer with additional speaker-dependent say-in facility" INTERACTIVE VOICE TECHNOLOGY FOR TELECOMMUNICATIONS APPLICATIONS, 1996. PROCEEDINGS., THIRD IEEE WORKSHOP ON BASKING RIDGE, NJ, USA 30 SEPT.-1 OCT. 1996, NEW YORK, NY, USA,IEEE, US, 30. September 1996 (1996-09-30), Seiten 53-56, XP010198864 ISBN: 0-7803-3238-5

## Beschreibung

Die vorliegende Erfindung betrifft ein Verfahren und ein Computerprogrammprodukt zur Ermittlung von Aussprachevarianten eines Wortes aus einem vorgebbaren Vokabular eines Spracherkennungssystems.

Die sprecherunabhängige Spracherkennung auf Geräten mit eingeschränkten Rechen- und Speicherplatzkapazitäten stellt nach wie vor eine große technische Herausforderung dar. Mittlerweile sind bereits Mobilfunkgeräte oder Infotainment- Systeme für das Auto erhältlich, die eine phonembasierte Spracherkennung auf Grundlage von Hidden- Markov- Modell (HMM) basierten Spracherkennungssytemen bereitstellen. Aufgrund der begrenzten Rechen- und Speicherplatzkapazitäten bei derartigen Systemen ist die akustische Modellierung jedoch nicht so detailliert und umfangreich wie bei beispielsweise Diktiersoftware für den Heimcomputer, weshalb auch die Spracherkennungsleistung im Vergleich geringer ist.

In phonembasierten Spracherkennungssystemen liegen die Vokabulare als Listen von Phonemfolgen vor. Jedem gewünschten Wort des Spracherkennungssystem- Vokabulars ist die zugehörige Phonemfolge zugeordnet. Für die Zahl "dreizehn" ist dies in so genannter SAMPA- Notation die Phonemfolge /<d r aI t s e: n>/. Üblicherweise ist jedem Phonem eine Zustandsfolge eines Hidden- Markov- Modells zugeordnet. Bei der Triphon-Modellierung kann diese zusätzlich noch abhängig vom Vorgänger- und Nachfolger- Phonem sein. Jedem Wort entspricht also eine Zustandsfolge, welche im Prinzip durch die phonetische Transkription des Wortes eindeutig bestimmt ist.

Bei einer schlechten Erkennung einzelner Wörter, gibt es verschiedene Möglichkeiten die Erkennungsgenauigkeit für diese Wörter zu erhöhen.

Sofern die Erkennungsgenauigkeit nur bei einzelnen Sprechern für einzelne Wörter auftritt, besteht die Möglichkeit, die betreffenden Wörter sprecherabhängig nachzutrainieren. Bei diesem so genannten SayIn Verfahren muss der Sprecher das falsch oder nicht erkannte Wort einmal oder mehrmals in das Spracherkennungssystem einsprechen. Aus den eingesprochenen Wörtern werden dann entweder über eine Modellierung der erkannten Phoneme als HMM- Zustandsfolgen oder mittels Zuordnung von HMM- Zuständen zu Segmenten des Sprachsignals die zugehörigen Zustandsfolgen bestimmt. Anschließend wird die neu ermittelte Zustandsfolge für das betreffende Wort dem Vokabular des Spracherkennungssystems hinzugefügt.

Bei einer dauerhaften, konsistent schlechten Erkennung eines spezifischen Sprechers, beispielsweise aufgrund seines Dialekts oder wegen anatomischer Besonderheiten seines Stimmapparates, kann das gesamte akustische Modell an den spezifischen Sprecher angepasst werden. Bei dieser so genannten Sprecheradaption spricht der Sprecher zunächst mehrere Sätze in das Spracherkennungssystem ein. Basierend auf den so erhaltenen Sprecherdaten wird das akustische Modell des Spracherkennungssystems mittels einer linearen Transformation an den jeweiligen Sprecher adaptiert. Ein gängiger Sprecheradaptionsalgorithmus ist beispielsweise ein Maximum- Likelihood-Linear- Regression (MLLR) Algorithmus.

Wenn allerdings bestimmte Worte von ganzen Benutzergruppen oftmals schlecht erkannt werden, sind die Möglichkeiten zur Erhöhung der Erkennungsgenauigkeit für diese Wörter begrenzt. Bei einem üblichen Verfahren wird in diesem Fall einem Wort nicht nur eine einzige Phonemfolge zugeordnet, sondern zusätzlich weitere Phonemfolgen. Beispielsweise könnte der Zahl dreizehn zusätzlich die Phonemfolge /<d r aI t s @ n>/ zugeordnet werden, das einem Verschlucken der zweiten Silbe bei schnellem Sprechen entspricht.

Nachteilig bei diesen Verfahren ist, dass sie entweder nur zur Erhöhung der Erkennungsgenauigkeit für einen spezifischen Sprecher anwendbar sind oder an die phonetische Repräsentation gebunden sind. Dies ist insbesondere bei Systemen mit begrenzten Rechen- und Speicherplatzkapazitäten problematisch, da die einzelnen Phoneme durch die zwangsläufig kleineren HMM- Modelle qualitativ nur schlecht abgebildet werden können.

EP-A-0 321 410 offenbart ein Verfahren, bei dem zur Darstellung von Aussprachevarianten eines Wortes eine Folge von Modellen erzeugt wird.

Der vorliegenden Erfindung stellt sich somit die Aufgabe, ein Verfahren zur Ermittlung von Aussprachevarianten eines Wortes aus einem vorgebbaren Vokabular eines Spracherkennungssystems anzugeben, welches einerseits eine sprecherunabhängige Erhöhung der Erkennungsgenauigkeit gewährleistet und andererseits eine von der phonetischen Repräsentation unabhängige Ermittlung der Aussprachevarianten ermöglicht.

Erfindungsgemäß wird diese Aufgabe durch ein Verfahren und ein Computerprogrammprodukt mit den in Anspruch 1 und Anspruch 5 angegebenen Merkmalen gelöst. Vorteilhafte Weiterbildungen der vorliegenden Erfindung sind in den abhängigen Ansprüchen angegeben.

Entsprechend der vorliegenden Erfindung werden in einem Verfahren zur Ermittlung von Aussprachevarianten eines Wortes aus einem vorgebbaren Vokabular eines Spracherkennungssystems zumindest eine Signalfolge, die eine Aussprachevariante eines Wortes repräsentiert, in Segmente unterteilt. Durch Zuordnung von zumindest einem Hidden- Markov- Modell (HMM-) Zustand zu den jeweiligen Segmenten der Signalfolge wird eine Signalzustandsfolge ermittelt. Anschließend erfolgt anhand von zwischen den einzelnen Signalzustandsfolgen eines Wortes ermittelten Abstandsmaßen eine Einteilung der Signalzustandsfolgen in Gruppen. Für die Gruppen wird jeweils zumindest ein repräsentierender Eintrag ermittelt und die repräsentierenden Einträge werden dem jeweils zugeordneten Wort als Aussprachevarianten zugewiesen.

Ein Hidden- Markov- Modell (HMM) ist ein stochastischer endlicher Automat, der aus einer endlichen Menge von Zuständen mit je einer zugeordneten Wahrscheinlichkeitsverteilung (Emissionswahrscheinlichkeit), einem Startzustand, Ausgabesymbolen und Transitionen besteht. Jede Transition ist mit einer Übergangswahrscheinlichkeit und einem Ausgabesymbol verknüpft. Wenn eine bestimmte Transition gewählt wird, wird das zugeordnete Ausgabesymbol erzeugt. Die Besonderheit ist, dass die Ausgabe, also eine Folge von Ausgabesymbolen, nicht eindeutig durch die Transitionen bestimmt ist. Der Beobachter kann von außen nur die Ausgabe, aber nicht die Transitionen, die zu dieser Ausgabe geführt haben, beobachten. Dies wird durch den Zusatz "Hidden" zum Ausdruck gebracht.

Üblicherweise werden Wörter aus einem Vokabular eines Spracherkennungssystems als Folgen von Grundeinheiten, zum Beispiel Phonemen, dargestellt. Phoneme sind die kleinsten bedeutungsunterscheidenden Lauteinheiten einer Sprache. In der Regel werden für die deutsche Sprache ca. 40 Einzelphoneme verwendet. Koartikulationseffekte können durch kontextabhängige Phonemmodelle besser berücksichtigt werden. Jedes Phonem wird wiederum durch eine Zustandsfolge eines Hidden-Markov-Modells (HMM) dargestellt, wodurch insbesondere stark variierende Sprechgeschwindigkeiten in die Berechnung einbezogen werden können. Jedes Wort entspricht also einer HMM- Zustandsfolge, welche durch die phonetische Transkription des Wortes eindeutig bestimmt ist.

Demgegenüber ist es auch möglich, wie in der bevorzugten Ausführungsvariante der vorliegenden Erfindung, einem Wort nicht eine an Phoneme gebundene HMM- Zustandsfolge zuzuordnen, sondern die HMM- Zustände direkt einzelnen Segmenten eines Wortes zuzuordnen und somit eine von der phonetischen Transkription unabhängige Zustandsfolge für ein Wort zu ermitteln.

Aus dem Umstand, dass die Signalzustandsfolgen gemäß einer bevorzugten Ausführungsvariante der vorliegenden Erfindung nicht aus Phonemfolgen hergeleitet werden, sondern ähnlich wie beim vorgestellten SayIn- Verfahren völlig frei wählbar sind, ergibt sich ein wesentlicher Vorteil der vorliegenden Erfindung. Somit wird nämlich der qualitativ schlechten Repräsentation der Phoneme bei kleinen Hidden- Markov- Modellen effektiv entgegen gewirkt, die sich in vielen Anwendungen aufgrund der begrenzten Rechen- und Speicherplatzkapazitäten einstellt.

Nach einer vorteilhaften Ausgestaltung der vorliegenden Erfindung wird das Abstandsmaß mit einem Viterbi- Algorithmus ermittelt.

Ein Viterbi Algorithmus findet ausgehend von einer Beobachtung und einem Hidden- Markov- Modell die wahrscheinlichste Pfadsequenz durch ein Hidden- Markov- Modell. Somit kann in vorteilhafter Weise beispielsweise mit Hilfe des Viterbi- Algorithmus ein Abstandsmaß zwischen jeder Signalzustandsfolge und dem Hidden- Markov- Modell des entsprechenden Wortes aus dem Vokabular ermittelt werden.

Gemäß einer weiteren vorteilhaften Ausgestaltung der vorliegenden Erfindung erfolgt die Einteilung der Signalzustandsfolgen in Gruppen mit Hilfe eines Vektorquantisierungsalgorithmus.

Durch einen Vektorquantisierungsalgorithmus wird eine Anzahl von hochdimensionalen Datenvektoren einigen diskreten Repräsentanten zugewiesen, welche man als Codebuchvektoren bezeichnet. Ein Beispiel für einen Vektorquantisierungsalgorithmus ist das so genannte k-means Clustering, bei dem jeweils ein Datenvektor einem von k Codebuchvektoren zugeordnet wird, unter der Maßgabe, dass die Summe der quadratischen Distanzen des Datenvektors zum zugeordneten Codebuchvektor minimal ist.

Eine Möglichkeit zur Ermittlung eines repräsentierenden Eintrages einer Gruppe ist einen Mittelwert von Mitgliedern der Gruppe zu ermitteln.

Eine weitere Möglichkeit besteht darin, einen Zentroid von Mitgliedern der Gruppe zu ermitteln. Hierbei wird beispielsweise diejenige Signalzustandsfolge ausgewählt, für die die Summe der Abstandsmaße zu den jeweils anderen der Gruppe zugehörigen Signalzustandsfolgen am geringsten ist.

Des weiteren kann ein repräsentierender Eintrag einer Gruppe mit Hilfe eines genetischen Algorithmus ermittelt werden.

Ein genetische Algorithmus ist eine probabilistische Suchmethode, welche den Prozess der natürlichen biologischen Evolution nachahmt. Ausgehend von einer Population von Individuen, entwickeln sich die Individuen in einem kollektiven Lernprozess weiter. Diese Fortentwicklung erfolgt durch die simulierten Evolutionsmechanismen Rekombination, Mutation und Selektion. Bei einem typischen Ablauf eines solchen Algorithmus erfolgt nach der Initialisierung einer Ausgangspopulation zunächst die Evaluierung der Qualität jedes einzelnen Individuums anhand einer so genannten Fitnessfunktion. Anhand dieses Wertes kann jedem Individuum der Population ein Fitnessgüte- Index zugeordnet werden. Bei der anschließenden Selektion wird mit Hilfe dieses Indexwertes ausgewählt, welches Individuum mit welcher Häufigkeit für die Reproduktion vorgesehen wird. Die nächste Generation wird dann durch Rekombination der ausgewählten Individuen erschaffen. Durch zufällige Mutation einzelner Individuen wird hierbei verhindert, dass der Suchalgorithmus in ein lokales Optimum konvergiert. Hiernach beginnt der Algorithmus wieder bei der Evaluierung der Fitnessfunktion für die neue Population.

Gemäß der vorliegenden Erfindung wählt man beispielsweise als Population zunächst eine Untermenge von Signalzustandsfolgen aus einer Gruppe von Signalzustandsfolgen. Deren jeweilige Fitness ergibt sich aus der Summe der Abstandsmaße zur gesamten Gruppe. Eine neue Generation der Population entsteht, wenn diejenigen Signalzustandsfolgen mit schlechter Fitness zugunsten von denjenigen Signalzustandsfolgen mit besserer Fitness ersetzt werden. Durch Mutationen, wie beispielsweise die Ersetzung einzelner Zustände, aber insbesondere durch Crossover- Operationen, wie beispielsweise das Auseinanderschneiden von Signalzustandsfolgen mit anschließender Rekombination von Konstituenten aus unterschiedlichen Ausgangssignalzustandsfolgen, können die Signalzustandsfolgen variiert werden. Nach einigen Zyklen kann die beste Signalzustandsfolge aus der Population als repräsentativer Eintrag ausgewählt werden.

Bei der Ausführung des erfindungsgemäßen Computerprogrammprodukts wird durch die Programmablaufsteuerungseinrichtung zumindest eine Signalfolge, die eine Aussprachevariante eines Wortes repräsentiert, in Segmente unterteilt. Durch Zuordnung von zumindest einem Hidden- Markov- Modell (HMM-) Zustand zu den jeweiligen Segmenten der Signalfolge wird eine Signalzustandsfolge ermittelt. Anschließend erfolgt anhand von zwischen den einzelnen Signalzustandsfolgen eines Wortes ermittelten Abstandsmaßen eine Einteilung der Signalzustandsfolgen in Gruppen. Für die Gruppen wird jeweils zumindest ein repräsentierender Eintrag ermittelt und die repräsentierenden Einträge werden dem jeweils zugeordneten Wort als Aussprachevarianten zugewiesen.

Die vorliegende Erfindung wird nachfolgend an einem Ausführungsbeispiel anhand der Zeichnungen näher erläutert. Es zeigt
- Figur 1: eine schematische Darstellung eines Verfahrensablaufes zur Ermittlung von Vokabulareinträgen für ein Spracherkennungssystem,
- Figur 2: eine schematische Darstellung eines Verfahrensablaufes zur erfindungsgemäßen Ermittlung von Vokabulareinträgen für ein Spracherkennungssystem.

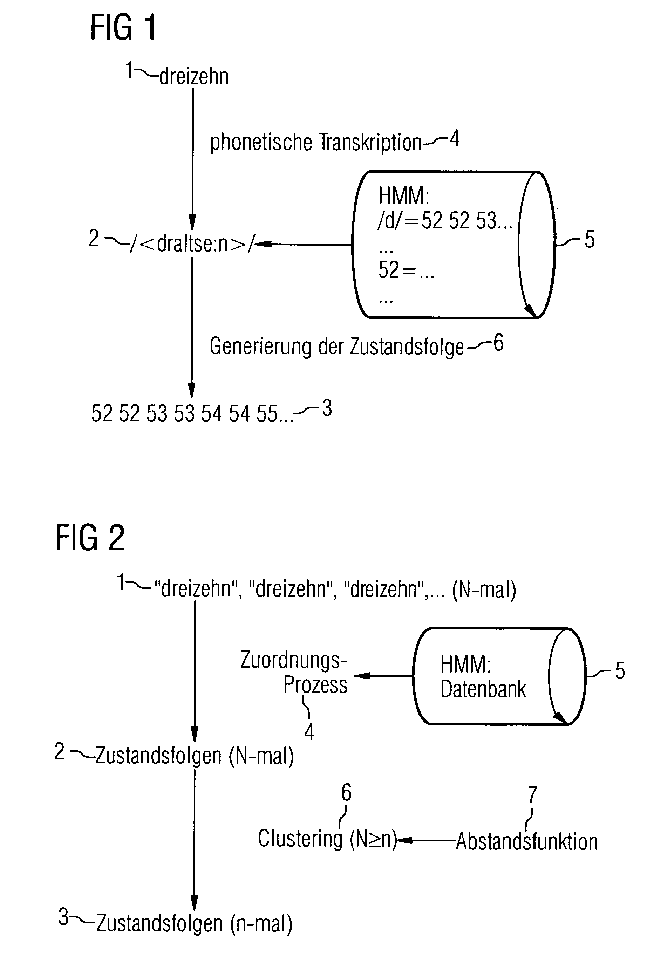

Die Figur 1 zeigt einen Verfahrensablauf zur Ermittlung eines Vokabulareintrages für ein Spracherkennungssystem für das Wort "dreizehn" 1. Zunächst wird die Graphemfolge "dreizehn" phonetisch transkribiert 4, so dass sich die Phonemfolge /<d r aI t s e: n>/ 2 ergibt. Mit Hilfe einer Hidden- Markov-Modell (HMM) Datenbank 5, die für jedes Phonem eine HMM- Zustandsfolge enthält, wird die zugehörige Zustandsfolge generiert 6. In diesem Ausführungsbeispiel wurden für das Phonem /d/ die HMM- Zustände mit den Indizes 52, 52, 53,... identifiziert. Hinter jedem Index verbirgt sich ein vollständig beschriebener HMM- Zustand. Durch Zusammenfügen der einzelnen Zustandsfolgen für die einzelnen Phoneme des Wortes "dreizehn" erhält man die gesuchte Signalzustandsfolge 3, welches man in das Vokabular des Spracherkennungssystems eintragen kann.

Die Figur 2 zeigt einen erfindungsgemäßen Verfahrensablauf zur Ermittlung von Aussprachevarianten eines Wortes aus einem Vokabular eines Spracherkennungssystems. In diesem Ausführungsbeispiel liegen N- verschiedene Äußerungen des Wortes "dreizehn" 1 vor. Wie in dem eingangs beschriebenen SayIn-Prozess 4 wird für jede der N- Signalfolgen 1 des Wortes "dreizehn" eine Signalzustandsfolge mit Hilfe einer HMM- Datenbank 5 ermittelt. Im Gegensatz zu dem in Figur 1 dargestellten Verfahren werden die HMM- Zustände hierbei den einzelnen Segmenten der Signalzustandsfolgen direkt zugewiesen ohne vorher eine phonetische Erkennung bzw. Transkription vorzunehmen. Als Ergebnis erhält man N- Signalzustandsfolgen 2, die anschließend in einem Clusteringprozess 6 mit Hilfe von Abstandsmaßen 7 in Gruppen eingeteilt werden. Hierdurch erhält man n Gruppen, wobei n kleiner oder gleich groß wie N sein kann. Jeder Gruppe wird ein repräsentierender Eintrag zugeordnet, der in diesem Ausführungsbeispiel das Zentroid der jeweiligen Gruppe ist. Diese n repräsentierenden Einträge bzw. n Signalzustandsfolgen werden dann dem Wort "dreizehn" als Aussprachevarianten zugeordnet.

Das erfindungsgemäße Verfahren bietet sich insbesondere dann an, wenn für Worte im Vokabular die Gefahr besteht, dass von der kanonischen Aussprache stark abgewichen wird. Beispielsweise gilt dies für längere Zahlworte, wie etwa "siebenundvierzig" mit der entsprechenden Phonemfolge /<z i: b @ n U n t f I r t s I C>/. Bei schnellem Sprechen wird hier sowohl die zweite Silbe der "sieben" als auch das "d" von "und" verschluckt. Eine phonetische Umschrift kann dieser Variabilität nicht gerecht werden, da sich die Veränderungen im Subphonem Bereich abspielen und da es aus Ressourcegründen nicht immer möglich ist, dass sämtliche Aussprachevarianten dem Vokabular hinzugefügt werden.

Da das Verfahren auf eine sprecherunabhängige Verbesserung der Erkennung einzelner Worte abzielt, wird eine große Anzahl von Äußerungen eines Wortes durch unterschiedliche Sprecher für die Ermittlung der Aussprachevarianten verwendet. Der eingangs beschriebene SayIn Prozess wäre hiermit zwar durchführbar, würde aber zu einer Vielzahl von Einträgen im Vokabular führen, da jede Äußerung als Aussprachevariante abgespeichert würde. Dies ist jedoch gerade bei begrenzten Rechen- und Speicherplatzkapazitäten unerwünscht. Ein wesentlicher Vorteil der vorliegenden Erfindung ist daher die sinnvolle Zusammenfassung vieler Trainingsäußerungen zu sehr wenigen und im Extremfall einer einzigen Aussprachevariante und damit Eintrag im Vokabular.

Durch die Verwendung vieler Trainingsäußerungen entstehen als weiterer Vorteil immer relativ robuste Repräsentationen der Aussprachevarianten eines Wortes. Die Leistungsfähigkeit der eigentlich phonembasierten Spracherkennung wird durch das Verfahren nicht gemindert.

Die Anwendung der vorliegenden Erfindung ist nicht auf das beschriebene Ausführungsbeispiel beschränkt.

## Patentansprüche

1. Verfahren zur Ermittlung von Aussprachevarianten eines Wortes aus einem vorgebbaren Vokabular eines Spracherkennungssystems, bei dem
- zumindest eine Signalfolge, die eine Aussprachevariante des Wortes repräsentiert, in Segmente unterteilt wird,
- für jede der unterteilten Signalfolgen durch Zuordnung von zumindest einem Hidden-Markov-Modell (HMM)-Zustand zu jeweils einem Segment einer der Signalfolgen eine Signalzustandsfolge ermittelt wird,
- anhand von zwischen den einzelnen Signalzustandsfolgen des Wortes ermittelten Abstandsmaßen eine Einteilung der Signalzustandsfolgen in Gruppen erfolgt,
- für jeweils eine Gruppe zumindest ein repräsentierender Eintrag ermittelt wird, und
- die repräsentierenden Einträge dem jeweils zugeordneten Wort als Aussprachevarianten zugewiesen werden, wobei
als repräsentierender Eintrag einer Gruppe ein Mittelwert von Mitgliedern der Gruppe ermittelt wird oder
als repräsentierender Eintrag einer Gruppe ein Zentroid von Mitgliedern der Gruppe ermittelt wird, oder
ein repräsentierender Eintrag einer Gruppe mit Hilfe eines genetischen Algorithmus ermittelt wird.

2. Verfahren nach Anspruch 1, wobei
das Abstandsmaß mit einem Viterbi- Algorithmus ermittelt wird.

3. Verfahren nach mindestens einem der vorherigen Ansprüche, wobei
die Einteilung in Gruppen mit einem Clusteringverfahren durchgeführt wird.

4. Verfahren nach Anspruch 3, wobei
die Einteilung in Gruppen mit einem Vektorquantisierungsverfahren durchgeführt wird.

5. Computerprogrammprodukt,
das in einen Arbeitsspeicher einer Programmablaufsteuerungseinrichtung ladbar ist und zumindest einen Codeabschnitt aufweist, bei dessen Ausführung zur Ermittlung von Aussprachevarianten eines Wortes aus einem vorgebbaren Vokabular eines Spracherkennungssystems,
- zumindest eine Signalfolge, die eine Aussprachevariante des Wortes repräsentiert, in Segmente unterteilt wird,
- für jede der unterteilten Signalfolgen durch Zuordnung von zumindest einem Hidden-Markov-Modell (HMM)-Zustand zu jeweils einem Segment einer der Signalfolgen eine Signalzustandsfolge ermittelt wird,
- anhand von zwischen den einzelnen Signalzustandsfolgen des Wortes ermittelten Abstandsmaßen eine Einteilung der Signalzustandsfolgen in Gruppen erfolgt,
- für jeweils eine Gruppe zumindest ein repräsentierender Eintrag ermittelt wird, und
- die repräsentierenden Einträge dem jeweils zugeordneten Wort als Aussprachevarianten zugewiesen werden, wenn das Computerprogrammprodukt in der Programmablaufsteuerungseinrichtung abläuft, wobei
als repräsentierender Eintrag einer Gruppe ein Mittelwert von Mitgliedern der Gruppe ermittelt wird oder
als repräsentierender Eintrag einer Gruppe ein Zentroid von Mitgliedern der Gruppe ermittelt wird, oder
ein repräsentierender Eintrag einer Gruppe mit Hilfe eines genetischen Algorithmus ermittelt wird.

## Claims

1. Method for determining pronunciation variants of a word from a predefinable vocabulary of a speech recognition system, wherein
- at least one signal sequence which represents a pronunciation variant of the word is subdivided into segments,
- a signal state sequence is determined for each of the subdivided signal sequences by assignment of at least one Hidden Markov Model (HMM) state to one segment of one of the signal sequences in each case,
- the signal state sequences are classified into groups on the basis of spacing intervals determined between the individual signal state sequences of the word,
- at least one representative entry is determined for a group in each case, and
- the representative entries are assigned as pronunciation variants to the assigned word in each case, wherein an average value of members of a group is determined as the representative entry of the group, or a centroid of members of a group is determined as the representative entry of the group, or a representative entry of a group is determined with the aid of a genetic algorithm.

2. Method according to claim 1, wherein
the spacing interval is determined using a Viterbi algorithm.

3. Method according to at least one of the preceding claims, wherein
the classification into groups is carried out using a clustering method.

4. Method according to claim 3, wherein
the classification into groups is carried out using a vector quantization method.

5. Computer program product
which can be loaded into a working memory of a program sequencing device and has at least one code section, upon the execution of which for determining pronunciation variants of a word from a predefinable vocabulary of a speech recognition system
- at least one signal sequence which represents a pronunciation variant of the word is subdivided into segments,
- a signal state sequence is determined for each of the subdivided signal sequences by assignment of at least one Hidden Markov Model (HMM) state to one segment of one of the signal sequences in each case,
- the signal state sequences are classified into groups on the basis of spacing intervals determined between the individual signal state sequences of the word,
- at least one representative entry is determined for a group in each case, and
- the representative entries are assigned as pronunciation variants to the assigned word in each case when the computer program product executes in the program sequencing device, wherein an average value of members of a group is determined as the representative entry of the group, or a centroid of members of a group is determined as the representative entry of the group, or a representative entry of a group is determined with the aid of a genetic algorithm.

## Revendications

1. Procédé destiné à la détermination de variantes de prononciation d'un mot provenant d'un vocabulaire prédéfinissable d'un système de reconnaissance vocale, dans lequel
- au moins une séquence de signaux représentant une variante de prononciation du mot est divisée en segments,
- une séquence d'états de signaux est déterminée pour chacune des séquences de signaux divisées par affectation d'au moins un état du modèle de Markov caché (HMM) à respectivement un segment de l'une des séquences de signaux,
- une classification des séquences d'états de signaux en groupes est réalisée à l'aide de dimensions d'écart déterminées entre les séquences individuelles d'états de signaux du mot,
- au moins une entrée représentante étant déterminée pour respectivement un groupe, et
- les entrées représentantes étant affectées au mot respectivement attribué en tant que variantes de prononciation,
une valeur moyenne de membres du groupe étant déterminée en tant qu'entrée représentante, ou
un centroide de membres du groupe étant déterminé en tant qu'entrée d'un groupe, ou
une entrée représentante d'un groupe étant déterminée à l'aide d'un algorithme génétique.

2. Procédé selon la revendication 1,
la dimension d'écart étant déterminée à l'aide d'un algorithme de Viterbi.

3. Procédé selon au moins l'une quelconque des revendications précédentes,
la classification en groupes étant exécutée à l'aide d'un procédé en cluster.

4. Procédé selon la revendication 3,
la classification en groupe étant exécutée à l'aide d'un procédé de quantification de vecteurs.

5. Produit de programme d'ordinateur,
qui est chargeable dans une mémoire de travail d'un dispositif de commande de déroulement de programme et présente au moins un segment de code, lors de l'exécution duquel, pour la détermination de variantes de prononciation d'un mot provenant d'un vocabulaire prédéfinissable d'un système de reconnaissance vocale,
- au moins une séquence de signaux représentant une variante de prononciation du mot est divisée en segments,
- une séquence d'états de signaux est déterminée pour chacune des séquences de signaux divisées par affectation d'au moins un état du modèle de Markov caché(HMM) à respectivement un segment de l'une des séquences de signaux,
- une classification des séquences d'états de signaux en groupes est réalisée à l'aide de dimensions d'écart déterminées entre les séquences individuelles d'états de signaux du mot,
- au moins une entrée représentante est déterminée pour respectivement un groupe, et
- les entrées représentants sont affectées au mot respectivement attribué en tant que variantes de prononciation lorsque le produit de programme d'ordinateur se déroule dans le dispositif de commande de déroulement de programme,
une valeur moyenne de membres du groupe étant déterminée en tant qu'entrée représentante, ou
un centroide de membres du groupe étant déterminé en tant qu'entrée d'un groupe, ou
une entrée représentante d'un groupe étant déterminée à l'aide d'un algorithme génétique.
